# EUROPEAN PATENT APPLICATION

(11) **EP 2 199 705 A1**
(43) Date of publication of application: **23.06.2010**
(21) Application number: 08792595.4
(22) Date of filing: 21.08.2008
(51) Int. Cl.: F25B 1/00, F25B 47/02

(54) **REFRIGERATION SYSTEM**

(30) Priority: 02.10.2007 JP 2007258816
(71) Applicant: Hoshizaki Denki Kabushiki Kaisha, Toyoake-shi, Aichi 470-1194 (JP)
(72) Inventor: SUZUKI, Yoshiyasu, Toyoake-shi Aichi 470-1194 (JP); KONDOU, Shigekazu, Toyoake-shi Aichi 470-1194 (JP); KASUGAI, Masaki, Toyoake-shi Aichi 470-1194 (JP)
(74) Representative: Müller-Boré & Partner Patentanwälte
(86) International application number: PCT/JP2008/064874
(87) International publication number: WO 2009/044591

(57) **Abstract**

A refrigeration device 30 includes two independent refrigeration circuits: the first refrigeration circuit 31A having an inverter compressor 32A and the second refrigeration circuit 31B having a constant-speed compressor 32B. An evaporator 37 is shared by both refrigeration circuits 31A, 31B. The inverter compressor 32A is normally driven and the constant-speed compressor 32B is additionally driven as necessary. The evaporator 37 includes a group of fins 41 having a plurality of fins 40 positioned along an airflow direction and arranged with a gap therebetween in a direction across the airflow direction. Evaporation tubes are routed in four tiers while penetrating through the fins 40 in the group of fins 41 and running in a zigzag in the airflow direction. The first evaporation tube 45A of the first refrigeration circuit 31A is arranged in the lower two tiers and the second evaporation tube 45B of the second refrigeration circuit 31B is arranged in the upper two tiers.

## Description

### TECHNICAL FIELD

The present invention relates to a refrigeration device having a plurality of independent refrigeration circuits and a common evaporator.

### BACKGROUND ART

A cold storage having a refrigeration device of this kind described in Patent Document 1 is known. The refrigeration device includes two independent refrigeration circuits: the first refrigeration circuit having an inverter compressor and the second refrigeration circuit having a constant-speed compressor. It also includes a common evaporator that is shared by those refrigeration circuits. The evaporator is housed in an evaporator compartment provided in a ceiling of a storage compartment of the cold storage. More specifically, the evaporator includes a group of fins in which a plurality of fins are positioned along an airflow direction and arranged with a gap therebetween along a direction across the airflow direction. In a front half area of the group of fins in the airflow direction, an evaporation tube of the first refrigeration circuit is routed in a plurality of tiers from top to bottom and in the depth direction while penetrating through the fins. In a rear half area, an evaporation tube of the second refrigeration circuit is routed in a plurality of tiers from top to bottom and in the depth direction while penetrating through the fins.
Only the first refrigeration circuit, that is, the inverter compressor is usually driven. Specifically, cooling operation (controlled cooling operation) is performed while a rotation speed of the inverter compressor is controlled. If a capacity of the first refrigeration circuit (including the inverter compressor) is not sufficient, the second refrigeration circuit, that is, a constant-speed compressor is additionally driven.
[Patent Document 1] Japanese Unexamined Patent Application Publication No. 2005-16874

### DISCLOSURE OF THE INVENTION

### (Problem to Be Solved by the Invention)

During the cooling operation, the evaporation tubes and the fins through which the evaporation tubes penetrate (i.e., the evaporator) are cooled down when the refrigerant is evaporated in the evaporation tubes. Cold air is generated by heat exchange while air from the inside of the storage compartment passes through the evaporator, and the generated cold air is then returned to the inside of the storage compartment. As a result, air circulation occurs. This air circulation cools down the inside of the storage compartment and frost is gradually formed in the evaporator.
When the inverter compressor is mainly driven in the known refrigeration device, the heat exchange is taken place mainly in the front half in the airflow direction where the evaporation tube of the first refrigeration circuit is arranged. Frost is formed in an entire cross-sectional airflow area in the evaporator and the airflow is greatly limited in a relatively early stage. As a result, a heat exchange rate decreases, that is, a cooling capacity decreases.
The present invention was made in view of the foregoing circumstances, and an object thereof is to maintain the airflow to the evaporator so that the cooling capacity is less likely to decrease.

### (Means for Solving the Problem)

A refrigeration device of the present invention includes a plurality of independent refrigeration circuits. At least one of the refrigeration circuits includes a capacity variable type compressor. The refrigeration circuits share an evaporator. The evaporator includes a group of fins having a plurality of fins positioned along an airflow direction and arranged with a gap therebetween in a direction across the airflow direction. Evaporation tubes are routed in a plurality of tiers while penetrating through each fin in the group of fins. The evaporation tubes for the respective independent refrigeration circuits are arranged in different tiers from each other.

With the above configuration, when the capacity variable type compressor in a specific refrigeration circuit is only driven, an area of the group of fins around the tier in which the evaporation tube of the specific refrigeration circuit is arranged is especially cooled down. An area around another tier is also cooled down but the temperatures is relatively high. Cold air is generated by heat exchange while air passes through the evaporator. Frost is mainly formed in an area around the tier in which the evaporation tube of the specific refrigeration circuit is arranged and the temperature is low. Even if clogging occurs in that area, an airflow path is still maintained in the other area around the other tier. In the area where the airflow path is maintained, the temperature of the evaporator is relatively high. However, the amount of airflow is still maintained and therefore the heat exchange rate, that is, the cooling capacity is less likely to decrease.

Further, the refrigeration device can have the following configurations.
(1) Two independent refrigeration circuits are provided and one of them includes a capacity variable type compressor and the other includes another compressor. The refrigeration circuits share one evaporator. The evaporation tube of the one of the refrigeration circuits and the evaporation tube of the other refrigeration circuit are routed in a plurality of tiers while penetrating each fin and running in a zigzag along the airflow direction in an upper area and a lower area of the evaporator, respectively.
With this configuration, when the one of the refrigeration circuit is mainly driven, frost is formed mainly in either upper or lower area of the group of fins in the evaporator and an airflow path is maintained in the other area.

(2) The evaporation tube of the one of the refrigeration circuits is arranged in the lower area of the evaporator, and the a defrosting heater is arranged on a lower surface under the group of fins.
When the one of the refrigeration circuit is mainly driven, frost is more likely to be formed in the lower area of the group of fins in the evaporator. Because the defrosting heater is arranged on the lower surface under the group of fins, the defrosting is efficiently performed.

### (Effect of the Invention)

According to the present invention, in the case that a capacity variable type compressor is mainly driven, an airflow path for an evaporator is maintained for a long period of time and a cooling capacity is less likely to decrease.

### BRIEF DESCRIPTION OF THE DRAWINGS

FIG. 1 is a cross-sectional view illustrating a part of a refrigeration device near the footprint area according to an embodiment of the present invention;
FIG. 2 is a circuit diagram of the refrigeration device;
FIG. 3 is a rear view of an evaporator;
FIG. 4 is a partial view of the evaporator;
FIG. 5 is a left side view of the evaporator;
FIG. 6 is a front view of the evaporator schematically illustrating frost formation; and
FIG. 7 is a right side view of the evaporator.

### Explanation of Reference Symbols

30: Refrigeration device, 31A: First refrigeration circuit, 31B: Second refrigeration circuit, 32A: Inverter compressor (capacity variable type compressor), 32B: Constant-speed compressor, 37: Evaporator, 40, 40L, 40S: Fin, 41: Group of fins, 45A: First evaporation tube, 45B Second evaporation tube, 49: Defrosting heater.

### BEST MODE FOR CARRYING OUT THE INVENTION

### <Embodiment>

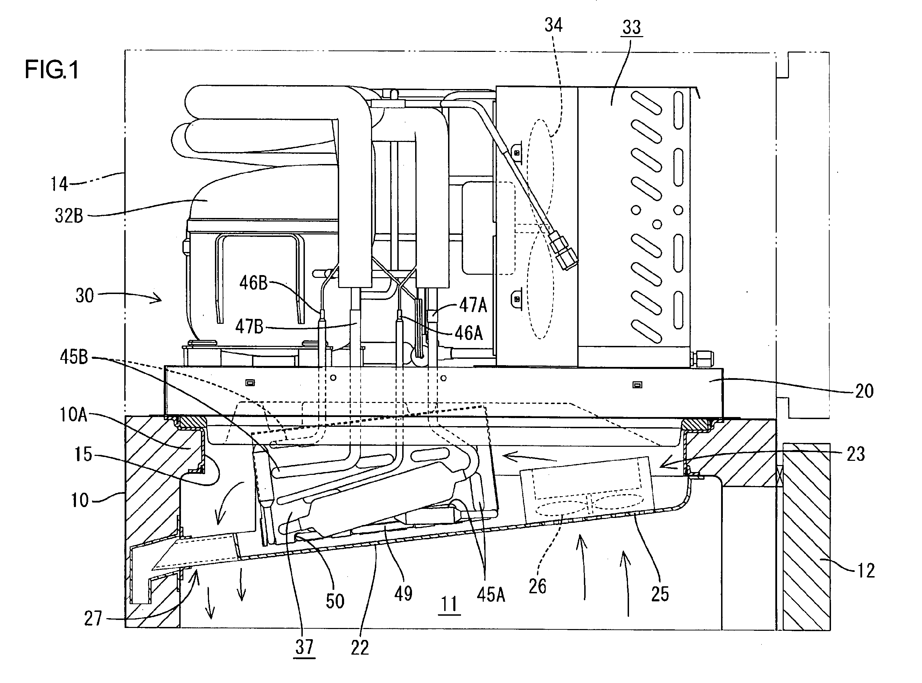

An embodiment of the present invention will be explained with reference to FIGS. 1 through 7. In this embodiment, a refrigeration device installed in a commercial-use upright refrigerator is used as an example.
In FIG. 1, the number 10 indicates a refrigerator body that is an insulated casing having an opening on the front. The inside of the body is a refrigeration compartment 11, and an insulating door 12 is assembled covering the opening of the refrigeration compartment 11 so as to be swingably openable and closable. Panels are installed on the top surface of the refrigerator body 10 so as to form a mechanical chamber 14.

At substantially the center of a ceiling 10A of the refrigerator body 10, which is also a bottom of the mechanical chamber 14, a rectangular opening 15 is provided. A unit base 20 on which a unitized refrigeration device 30, which will be explained later, is mounted so as to cover the opening 15 from the top. A cooling duct 22 that also functions as a drain pan is installed at a downslope angle extending from an edge of the lower surface of the ceiling 10A located on the front side of the opening 15 (on the right side in FIG. 1) toward a back wall. An evaporator chamber 23 is provided between the unit base 20 and the cooling duct 22. An air suction port 25 is provided in a front end area of the cooling duct 22, an internal fan 26 is attached to an inner surface of the cooling duct 22 in the area, and an air outlet 27 is provided in a rear end area of the cooling duct 22.

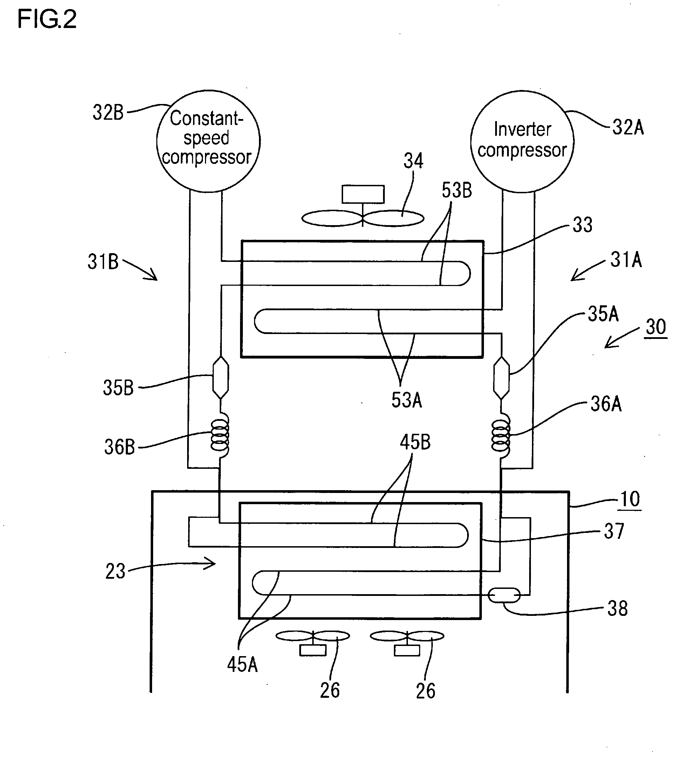

The refrigeration device 30 has two independent refrigeration circuits: the first refrigeration circuit 31A (one of the refrigeration circuits of the present invention) and the second refrigeration circuit 31B (another of the refrigeration circuits of the present invention). The refrigeration circuits 31A, 31B have separate compressors but share an evaporator and a condenser.
As illustrated in FIG. 2, the first refrigeration circuit 31A includes an inverter compressor 32A, the common condenser 33, a dryer 35A, a capillary tube 36A and the common evaporator 37. They are cyclically connected via refrigeration piping. The inverter compressor 32A is configured such that the rotation speed is variable and the capillary tube 36A is decompression means. In the first refrigeration circuit 31A, an accumulator 38 is connected in the refrigeration piping on an output side of the evaporator 37.
The second refrigeration circuit 31B includes a constant-speed compressor 32B, the common condenser 33, a dryer 35B, a capillary tube 36B and the common evaporator 37. They are cyclically connected via refrigeration piping. The constant-speed compressor 32B is configured such that the rotation speed is constant and the capillary tube 36B is decompression means.

Among those components of both refrigeration circuits 31A, 31B, the inverter compressor 32A, the constant-speed compressor 32B, the common condenser 33, both dryers 35A, 35B, both capillary tubes 36A, 36B are arranged on the upper surface of the unit base 20 while the common evaporator 37 is hung from the lower surface of the unit base 20 and unitized. A common condenser fan 34 is installed behind the common condenser 33.
When the unit base 20 is placed over the opening 15 of the ceiling 10A of the refrigerator body 10, the evaporator 37 is housed in the evaporator chamber 23 behind the internal fan 26.

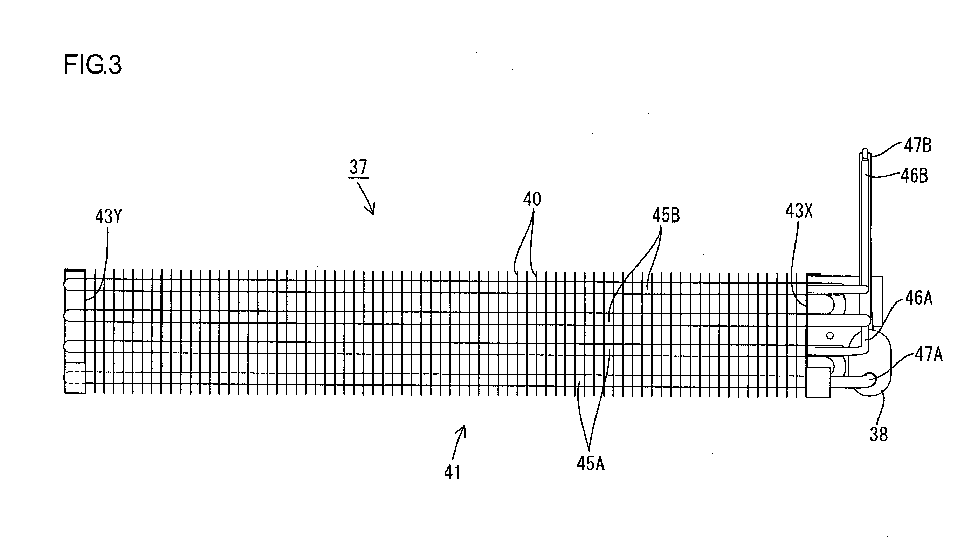

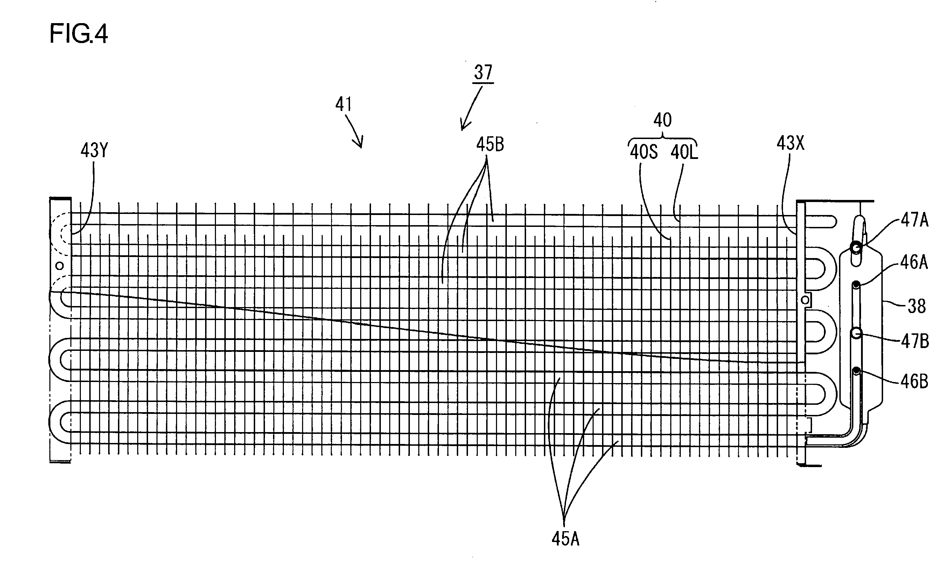

The configuration of the evaporator 37 will be explained. The evaporator 37 has a block shape that is substantially flat and horizontally long. It is positioned such that its rear is lower than its front along the downslope of the cooling duct 22 and slightly above the cooling duct 22. It is housed in the evaporator chamber 23 so as to occupy substantially entire width of the evaporator chamber 23.
As illustrated in FIGS. 3 through 5, the evaporator 37 includes a plurality of fins 40 (a little over seventy fins in this embodiment) that are metal plates having a rectangular shape. They are arranged in the horizontal direction at regular intervals such that their longitudinal sides are aligned in the front to rear direction. As a result, a group of fins 41 is formed in a block shape that is substantially flat and long in the horizontal direction. The fins 40 include two kinds of fins: long fins 40L and short fins 40S. As illustrated in FIG. 4, the long fins 40L and the short fins 40S are arranged alternatively such that rear ends of the fins 40L, 40S are aligned (the lower part of FIG. 4). Front ends of the long fins 40L are positioned a predetermined length farther from the front ends of the short fins 40S. The long fins 40L and the short fins 40S are both referred to as the fins 40 hereafter unless they need to be distinguished from each other.
End plates 43X, 43Y are disposed on right and left ends of the group of fins 41.

Evaporation tubes, which are parts of the refrigeration piping in the refrigeration circuits 31A, 31B, are routed in the group of fins 41 while penetrate through the fins 40, and form the evaporator 37. The evaporation tubes are routed in four tiers in total in the vertical direction within the group of fins 41. Bottom two tiers are the first evaporation tube 45A of the first refrigeration circuit 31A on the inverter compressor 32A side. Upper two tiers are the second evaporation tube 45B of the second refrigeration circuit 31B on the constant-speed compressor 32B side.

Specifically, as illustrated in FIG. 4, in the second tier from the bottom, the first evaporation tube 45A in the first refrigeration circuit 31A starts from the rear right end when viewed from the rear. It penetrates through each fin 40 from right to left and U-turns after penetrating from the left end plate 43Y. Then, it penetrates through each fin 40 from left to right and U-turns after penetrating from the right end plate 43X. Then, it runs toward the left again. Such back-and-forth routing is repeated four times from the rear side to the front side, that is, the evaporation tube 45A is routed in a zigzag. The most front part of the first evaporation tube 45A that is routed from left to right penetrates only through end portions of the long fins 40L of the fins 40 and turns toward the bottom tier after penetrating from the right end plate 43X.
In the bottom tier, the first evaporation tube 45A starts from the front right end when viewed from the rear. It penetrates through the ends of the long fins 40L of the fins 40 from right to left and U-turns after penetrating from the left end plate 43Y. Then, it penetrates through the fins 40 from left to right and U-turns after penetrating from the right end plate 43X. Then, it runs toward the left again. Such back-and-forth routing is repeated four times from the front side to the rear side at this time, that is, the evaporation tube 45A is routed in a zigzag in the same manner. It ends at the right rear end when viewed from the rear.

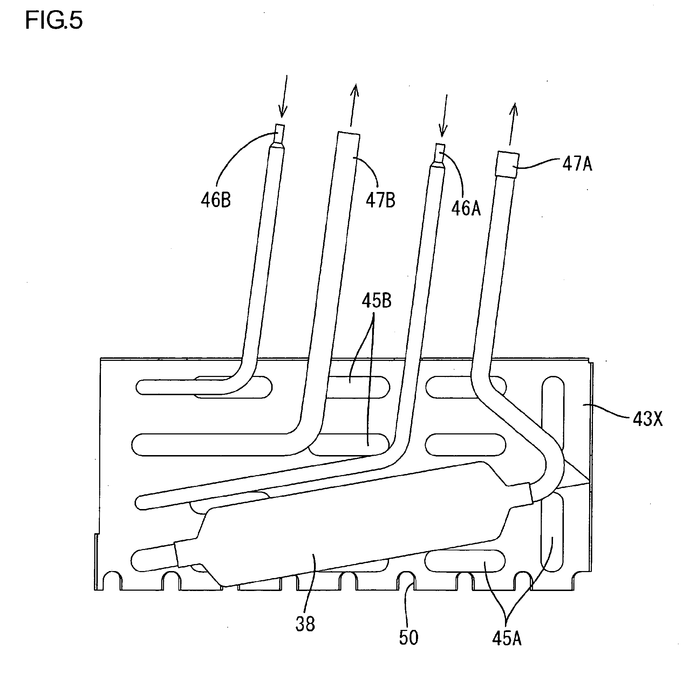

The first evaporation tube 45A of the first refrigeration circuit 31A is routed in the group of fins 41 while penetrating through the fins 40 so as to run in a zigzag from rear to front in the second tier from the bottom and from front to rear in the bottom tier. As illustrated in FIG. 5, an output end portion 47A of the first evaporation tube 45A penetrates from the right end plate 43X, connects to the accumulator 38, continues from the accumulator 38 and rises at a point near a front end of the end plate 43X. An input end portion 46A of the first evaporation tube 45A penetrates from the right end plate 43X and rises at a point slightly to the rear with respect to the output end portion 47A.

The second evaporation tube 45B of the second refrigeration circuit 31B is routed in the upper two tiers in the group of fins 41. Although the routing is the same as the first evaporation tube 45A of the first refrigeration circuit 31A, it will be explained again. The second evaporation tube 45B starts from the rear right end in the top tier when viewed from the rear. It penetrates through the fins 40 from right to left and U-turns after penetrating from the left end plate 43Y. Then, it penetrates through the fins 40 from left to right and U-turns after penetrating from the right end plate 43X. Then, it runs toward the left again. Such back-and-forth routing is repeated four times from the rear side to the front side, that is, the second evaporation tube 45B is routed in a zigzag. The most front part of the second evaporation tube 45B that is routed from left to right penetrates only through the end portions of the long fins 40L of the fins 40 and turns toward the second tier from the top after penetrating from the right end plate 43X.
In the second tier from the top, the first evaporation tube 45B starts from the front right end when viewed from the rear. It penetrates through the end portions of the long fins 40L of the fins 40 from right to left and U-turns after penetrating from the left end plate 43Y. Then, it penetrates through the fins 40 from left to right and U-turns after penetrating from the right end plate 43X. Then, it runs toward the left again. Such back-and-forth routing is repeated four times from the front side to the rear side at this time, that is, the evaporation tube 45B is routed in a zigzag in the same manner. It ends at the rear right end when viewed from the rear in the second tier from the top.

The second evaporation tube 45B of the second refrigeration circuit 31B is routed in the group of fins 41 while penetrating through the fins 40 so as to run in a zigzag from rear to front in the top tier and from front to rear in the second tier from the top. As illustrated in FIG. 5, an output end portion 47B of the second evaporation tube 45B penetrates from the right end plate 43X and rises at a point more to the rear than the input end portion 46A of the first evaporation tube 45A. An input end portion 46B of the second evaporation tube 45B penetrates from the right end plate 43X and rises at a point near the rear end of the end plate 43X.
Further, defrosting operation is performed as necessary to remove frost in the evaporator 37 and other parts. To perform this operation, the evaporator 37 includes a defrosting heater, which is a sheathed heater. Specifically, the defrosting heater 49 is engaged to the engagement grooves 50 formed on the lower surface in the group of fins 41 so as to be routed in a zigzag.

Next, operational effects of the present embodiment will be explained.
Cooling operation is performed by driving the refrigeration device 30 and the internal fan 26. As indicated with arrows in FIG. 1, air in the refrigeration compartment 11 is sucked into the evaporator chamber 23 through an air suction port 25 by the internal fan 26. The air flows into the evaporator 37 from the front side and cools down by heat exchange. As a result, cold air is generated. The cold air is blown out from the air outlet 27 along the rear surface of the refrigeration compartment 11. The inside of the refrigeration compartment 11 is cooled down with cold air supplied and circulated in the refrigeration compartment 11 and the inside temperature is controlled.

In this embodiment, a speed of the inverter compressor 32A is controlled so that the inside temperature is controlled according to a predetermined control characteristic. Specifically, the controlled cooling characteristic is stored in the driving control section in advance as data on changes in target temperature drop over time. During cooling operation, the inside temperature is detected at each predetermined sampling time and an actual temperature drop is calculated based on the detected temperature. The target temperature drop at that inside temperature is read out of the above stored data. If the actual temperature drop is smaller than the target temperature drop, the speed of the inverter compressor 32A is increased. If it is larger, the speed of the inverter compressor 32A is decreased or the inverter compressor 32A is stopped. Through such operation, the inside of the refrigeration compartment 11 is cooled down according to the controlled cooling characteristic.
If the capacity of the inverter compressor 32A is not sufficient due to an increase in internal load or ambient temperature, for instance, and if an increase in speed is required after the speed of the inverter compressor 32A has reached the maximum rotation speed, the constant-speed compressor 32B is additionally driven.

The inverter compressor 32A, that is, the first refrigeration circuit 31A is normally driven. The lower half area of the evaporator 37 in which the first evaporation tube 45A of the first refrigeration circuit 31A is arranged is especially cooled down. The upper half area is cooled down but the temperature is relatively high. Air in the refrigeration compartment 11 passes through the evaporator 37 in the above condition and cold air is generated by heat exchange. When the capacity of the inverter compressor 32A is determined as insufficient, the constant-speed compressor 32B, that is, the second refrigeration circuit 31B is additionally driven. Thus, the evaporator 37 is entirely cooled down to a low temperature and used for heat exchange.

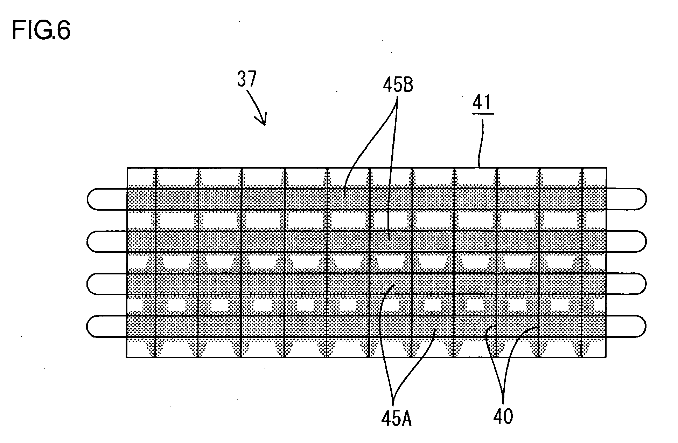

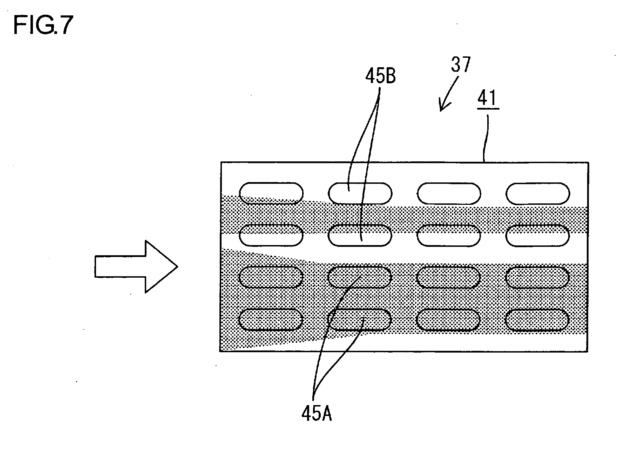

As the air in the refrigeration compartment 11 cooled down by heat exchange while passing through the evaporator 37, frost is formed. In FIGS. 6 and 7, dotted areas indicate frosted areas. As described above, the inverter compressor 32A, that is, the first refrigeration circuit 31A is only driven normally. As illustrated in FIG. 6, the frost is mainly formed on the first evaporation tube 45A and in the lower half area of the group of fins 41 where the first evaporation tube 45A penetrates. The upper half area of the fin group 41 is also cooled down accordingly and frost is formed as well. However, the temperature in that area is relatively high and thus the frost is less likely to be formed.
The constant-speed compressor 32B, that is, the second refrigeration circuit 31B is additionally driven as necessary. However, the driving time is limited to a short period. Therefore, the second evaporation tube 45B and the lower half area of the group of fins 41 where the second evaporation tube 45B penetrates are less likely to be frosted.

In the lower half area of the evaporator 37 where the first evaporation tube 45A on the inverter compressor 32A side, the inverter compressor 32A being normally used, the amount of frost is larger. As illustrated in FIG. 6, a gap between adjacent parts of the first evaporation tube 45A and that between the fins 40 are narrowed. As illustrated in FIG. 7, the amount of frost is larger on the font side of the evaporator 37, which is an upwind side of an airflow in the refrigeration compartment 11, because the inside air with a relatively high temperature hits the parts on this side. As a result, clogging is more likely to occur first on this side. If clogging occurs in the lower half area, a gap between adjacent parts of the second evaporation tube 45B and that between the fins 40 are maintained because the amount of frost is small in the upper half area. Namely, the airflow path of the inside air is maintained. When only the inverter compressor 32A, which is a normally driven compressor, is driven, the temperature of the evaporator 37 in the upper half area is relatively high. However, the amount of the airflow is still maintained. Therefore, the heat exchange rate is less likely to decrease, that is, the cooling capacity is less likely to decrease.

The defrosting operation is performed at proper time. The defrosting operation is performed by tuning the defrosting heater 49 on to generate heat while the refrigeration device 30 and the internal fan 26 are turned off. As described above, the lower half of the evaporator 37 is more likely to be frosted. Because the defrosting heater 49 is disposed on the lower surface of the evaporator 37, defrosting is efficiently performed.

According to the present embodiment as described above, the first refrigeration circuit 31A on the inverter compressor 32A side and the second refrigeration circuit 31B on the constant-speed compressor 32B side share the evaporator 37. A part of the evaporator used by the inverter compressor 32A that is normally used is located in the lower half area through which the inside air flows. A part of the evaporator used by the constant-speed compressor 32B is located in the upper hall area. With this configuration, the upper half of the evaporator 37 is efficiently used as well as the lower half when the inverter compressor 32A is only driven. This contributes to energy saving.

Although the lower half of the evaporator 37 is more likely to be frosted, the upper half is less likely to be frosted and thus the airflow path of the inside air is maintained in this area even if clogging occurs in the lower half area. When the inverter compressor 32A is only driven, the temperature of the evaporator 37 is relatively high in the upper half area of the evaporator 37. However, the amount of airflow is still maintained. Therefore, the heat exchange rate, that is, the cooling capacity is less likely to decrease.
As means for maintaining the amount of airflow in the case of frost formation, one having a clearance between the evaporator 37 and the unit base 20 may be considered. This embodiment does not require such a clearance for maintaining the amount of airflow. Thus, the evaporator 37 is less likely to project toward the refrigeration compartment 11 side and therefore the internal volume of the refrigeration compartment 11 is less likely to be reduced.

As described above, the airflow path of the inside air in the evaporator 37 is maintained for a relatively long period. As a result, an interval of the defrosting operation can be prolonged. Regarding the defrosting operation, the lower half of the evaporator 37 is more likely to be frosted but the defrosting heater 49 is located on the lower surface of the evaporator 37 and thus the defrosting operation is efficiently performed.
The input end portions 46A, 46B and the output end portions 47A, 47B of the first evaporation tube 45A and the second evaporation tube 45B are all provided on one end of the group of fins 41. Therefore, they can be easily connected to the refrigeration piping and space required for piping is kept small.

<Other Embodiments> The present invention is not limited to the embodiment as explained above with reference to the drawing. For example, the following embodiments are included within the scope of the present invention. Furthermore, further various configurations other than the following embodiments are also possible within the scope and spirit of the invention.
(1) Contrary to the above embodiment, the first evaporation tube of the first refrigeration circuit on the inverter compressor side may be provided in the upper half area of the group of fins and the second evaporation tube of the second refrigeration circuit on the constant-speed compressor side may be provided in the lower half area. With this configuration, the amount of airflow can be maintained for a long period of time at least.
(2) When the evaporation tubes are routed in the four tiers in total as in the above embodiment, the first evaporation tube of the first refrigeration circuit on the inverter compressor side and the second evaporation tube of the second refrigeration circuit on the constant-speed compressor side may be arranged in every other tier and in different tiers from each other. With this configuration, the amount of airflow is also maintained for a long period of time.
(3) Any number of tiers of the evaporation tubes in the evaporator (the group of fins) can be provided as long as it is two or larger.

(4) The evaporator may be arranged vertically inside the evaporator chamber provided on the rear wall side of the refrigeration compartment, for example. In this case, heat exchange is taken place by circulating inside air in a vertical direction. The first evaporation tube of the first refrigeration circuit on the inverter compressor side and the second evaporator for the second refrigeration circuit on the constant-speed compressor side may be routed in a front area and a rear area, respectively, in a direction across the airflow direction.
(5) The condenser may be provided separately of the first refrigeration circuit and the second refrigeration circuit.
(6) The present invention is not limited to the upright refrigerator used as an example in the above embodiment. It may be generally applied to ones installed in any cold storages including horizontal refrigerators and freezers, and constant temperature and high humidity storages.

## Claims

1. A refrigeration device, comprising:
a plurality of independent refrigeration circuits including a variable performance type compressor in at least one of the independent refrigeration circuits and sharing an evaporator, wherein:
the evaporator includes a group of fins having a plurality of fins positioned along an airflow direction and arranged with a gap therebetween in a direction across the airflow direction;
evaporation tubes are routed in a plurality of tiers while penetrating through each of the fins; and
the evaporation tubes for respective independent refrigeration circuits are arranged in different tiers from each other.

2. The refrigeration device according to claim 1, wherein:
two independent refrigeration circuits are provided;
one of the independent refrigeration circuits includes a capacity variable type compressor and another of the independent refrigeration circuits includes another compressor;
the independent refrigeration circuits share the evaporator;
the evaporation tube of the one of the independent refrigeration circuits and the evaporation tube of the other of the independent refrigeration circuits are routed in a plurality of tiers while penetrating the each fin and running in a zigzag along the airflow direction in an upper area and a lower area of the evaporator, respectively.

3. The refrigeration device according to claim 2, wherein:
the evaporation tube of the one of the independent refrigeration circuits is arranged in the lower area of the evaporator; and
a defrosting heater is arranged on a lower surface under the group of fins.
